(19) Europäisches Patentamt / European Patent Office / Office européen des brevets

(11) **EP 2 938 981 B1**

(12) **FASCICULE DE BREVET EUROPEEN**

(45) Date de publication et mention
de la délivrance du brevet:
**08.08.2018 Bulletin 2018/32**

(21) Numéro de dépôt: **14711826.9**

(22) Date de dépôt: **24.02.2014**

(51) Int Cl.:
*G01K 1/02* *(2006.01)*       *G01K 1/14* *(2006.01)*
*G01K 7/42* *(2006.01)*       *B29C 65/02* *(2006.01)*
*B29C 65/20* *(2006.01)*       *B29C 65/34* *(2006.01)*
*B29K 23/00* *(2006.01)*       *B29L 23/00* *(2006.01)*
*F16L 47/03* *(2006.01)*

(86) Numéro de dépôt international:
**PCT/FR2014/050374**

(87) Numéro de publication internationale:
**WO 2014/147316 (25.09.2014 Gazette 2014/39)**

(54) **DISPOSITIF DE MESURE DE L'ÉVOLUTION D'UN CHAMP DE TEMPÉRATURE ET PROCÉDÉ ASSOCIÉ D'ÉVALUATION DE LA QUALITÉ D'UNE OPÉRATION DE SOUDAGE**

VORRICHTUNG ZUR MESSUNG DES FORTSCHRITTS EINES TEMPERATURFELDS UND ZUGEHÖRIGES VERFAHREN ZUR BEURTEILUNG DER QUALITÄT EINES SCHWEISSVORGANGS

DEVICE FOR MEASURING THE EVOLUTION OF A TEMPERATURE FIELD AND ASSOCIATED METHOD FOR ASSESSING THE QUALITY OF A WELDING OPERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2013 FR 1352372**

(43) Date de publication de la demande:
**04.11.2015 Bulletin 2015/45**

(73) Titulaire: **ENGIE**
**92400 Courbevoie (FR)**

(72) Inventeurs:
• **BOUJLAL, Adil**
**F-94220 Charenton-le-Pont (FR)**
• **GUEUGNAUT, Dominique**
**F-75005 Paris (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**EP-A1- 0 323 793       EP-A1- 2 255 952
EP-A2- 1 225 028       US-A- 4 943 706**

## Description

### Domaine technique

La présente invention se rapporte au domaine des dispositifs et procédés d'évaluation ou de contrôle pour l'expertise et le diagnostic de soudage de pièces en matière plastique utilisées pour la distribution de fluides. A titre d'exemple illustratif, ladite matière plastique est notamment du polyéthylène et lesdits fluides sont notamment du gaz naturel ou de l'eau. En outre, a titre d'exemple illustratif, le soudage de pièces en matière plastique est effectué par électrofusion ou par soudage bout à bout.

La présente invention se rapporte plus particulièrement à un dispositif de mesure de l'évolution d'un champ de température dans les conditions d'une opération de soudage entre deux pièces en matière plastique. La présente invention se rapporte également à un procédé associé d'évaluation de la qualité de soudage entre deux pièces en matière plastique.

La technique d'assemblage de pièces en matière plastique, en particulier de pièces en polyéthylène, par électrofusion ou par soudage bout à bout représente aujourd'hui une des techniques les plus utilisées sur le réseau de distribution de gaz. La technique de soudage par électrofusion est notamment décrite dans le document de brevet FR2901173. Selon cette technique, un insert chauffant ou une nappe chauffante, constituée tel un tricot ou enroulement de fils résistifs, est disposé entre les deux pièces en matière plastique à souder par fusion, la nappe étant alimentée électriquement par un automate réglable en tension ou en intensité de courant.

Pour ce qui concerne la technique de soudage en bout à bout, un miroir chauffant est placé entre deux tubes de matière plastique de même diamètre. La mise sous tension dudit miroir chauffant permet de chauffer l'extrémité de chaque tube à souder. Les tubes sont ensuite approchés et pressés l'un contre l'autre jusqu'à soudage.

En effet, malgré la maturité des deux techniques de soudage des pièces en matière plastique mentionnées, le retour d'expérience fait apparaître un certain nombre de défaillances qui peuvent parfois ne pas se révéler au travers des différents essais mis en place lors des contrôles de qualité.

Il est donc nécessaire de mettre en place un procédé d'évaluation ou de contrôle complémentaire permettant de s'assurer, le plus en amont possible d'une opération de soudage, du bon fonctionnement des pièces en matière plastique au regard de ses aptitudes à souder, pour assurer l'intégrité du réseau et prévenir en amont toute dérive de fabrication.

Le soudage de pièces en matière plastique découle majoritairement d'un phénomène d'interdiffusion macromoléculaire dont les paramètres principaux sont la température et le temps. La théorie d'interdiffusion permet, à partir de la connaissance des profils de température dans les pièces lors de leur soudage, de définir un niveau de qualité minimum de la soudure qui tienne compte des caractéristiques des matériaux plastiques utilisés.

Pour quantifier le niveau de qualité, Il est nécessaire de pouvoir déterminer l'évolution, pendant toute la durée du cycle de soudage (par exemple: électrofusion ou soudage bout à bout), du champ de température en tout point de l'interface entre les pièces à souder.

Pour quantifier ou visualiser un tel champ de température, il existe deux principales solutions techniques à savoir :

- des techniques de mesure par caméras thermiques, et
- des techniques de mesure par intégration de films à capteurs thermiques.

Les techniques de mesure par caméras thermiques consistent à enregistrer les différents rayonnements infrarouges émis par les pièces à souder, ces rayonnements variant en fonction de la température desdites pièces. Ces techniques présentent plusieurs inconvénients majeurs. Parmi ceux-ci, l'accès au champ de température limité à une température maximale de la surface observée des pièces, or la mesure de cette seule température ne permet pas de déterminer l'évolution thermique à l'interface entre les deux pièces à souder sans nécessiter des calculs complexes basés sur des hypothèses fortes relatives à l'émissivité et la convection des matériaux mis en jeu.

Les techniques de mesure par intégration de films à capteurs thermiques consistent plus particulièrement soit en une technique par intégration de films à micro-capteurs, soit en une technique de films indicateurs de température surfacique. La première technique présente les inconvénients :

- de nécessiter l'utilisation de colles pour maintenir le film entre les deux pièces à souder, ces colles n'étant générale-lement pas adaptées à la gamme de température mise en jeu lors d'une opération de soudage, et
- de présenter une forte dépendance par rapport au milieu ambiant et corrélativement de nécessiter des ajustements pour s'affranchir de cette forte dépendance.

La deuxième technique consiste à utiliser, entre les deux pièces à souder, des films indicateurs de température surfacique qui ont la propriété de changer instantanément de couleur sous l'effet de gradients de température. Elle ne permet pas de suivre les évolutions de température tout au long du cycle de soudage et sa plage de fonctionnement n'est pas compatible avec la gamme des températures mises en jeu lors d'une opération de soudage.

Par ailleurs, il existe des techniques de mesure par capteurs thermiques rapportés à l'interface de soudage soit du coté d'un accessoire soudable, soit du coté d'un tube sur lequel l'accessoire est destiné à être soudé. Selon ces techniques, des capteurs thermiques sont intégrés à la surface d'une des pièces à souder par perçage dudit matériau, puis bloqués dans les perçages, avant de mesurer le champ de température lors de l'opération de soudage. Ces opérations de perçage et de blocage sont généralement réalisées pour garantir une fixation et un positionnement optimal des capteurs thermiques. Ces techniques par capteurs thermocouples sont relativement précises, mais chronophages, car elles nécessitent une mise en oeuvre fastidieuse, voire rédhibitoire pour certains matériaux et présentent en outre les inconvénients de ne pas permettre :

- une reproductibilité du positionnement des capteurs thermiques,
- une réutilisation des capteurs thermiques, notamment du fait que certains sont piégés dans les matériaux lors du soudage,
- une éventuelle réutilisation avec une bonne fiabilité de mesure même après extraction, et
- une exploitation des résultats qui ne soit pas limitée à quelques points épars de mesures de température.

Il existe donc un réel besoin de proposer une solution palliant au moins un des inconvénients de l'art antérieur, et en particulier de proposer un dispositif de mesure de l'évolution d'un champ de température dans les conditions d'une opération de soudage entre une première pièce et une seconde pièce en matière plastique, qui soit simple d'utilisation et réutilisable, pour s'assurer, selon le procédé d'évaluation ou de contrôle associé, de la qualité de la soudure qui serait obtenue dans ces conditions et avec lesdites matières plastiques.

La demande de brevet EP2255952 (A1) décrit un procédé de fabrication d'un ensemble de moule de résine.

La demande de brevet EP0323793 (A1) décrit un ensemble raccord de tuyau de prise en plastique pour relier les extrémités de deux morceaux de tuyau en plastique.

La demande de brevet EP1225028 (A2) décrit un procédé de réglage de la séquence de traitement pendant la fabrication de joints de scellement.

La demande de brevet US4943706 (A) décrit un procédé et un dispositif permettant la fusion des matériaux thermoplastiques.

A cette fin, le dispositif de l'invention, par ailleurs conforme à la définition générique qu'en donne le préambule ci-dessus, est essentiellement tel qu'il comprend une fausse pièce représentative de la première pièce. La fausse pièce est instrumentée au moyen d'un ensemble de capteurs thermiques fixés et répartis au moins sur une partie d'une surface de contact de la fausse pièce avec la seconde pièce. En outre, la fausse pièce est constituée d'un matériau non soudable lors de l'opération

de soudage et présente des caractéristiques thermiques proches de celles de la première pièce.

On entend ici par « fausse pièce représentative de la première pièce », une pièce qui remplace la première pièce, à souder avec la seconde pièce.

En outre, on entend ici par le fait que la fausse pièce présente des caractéristiques thermiques « proches » de celles de la première pièce que chaque caractéristique thermique de la fausse pièce ne diffère pas d'un facteur supérieur à 3 de la caractéristique thermique correspondante de ladite première pièce.

Ainsi, en plaçant le dispositif selon l'invention en lieu et place d'une première pièce à souder avec une seconde pièce, il est avantageusement possible, selon le procédé d'évaluation décrit ci-dessous, de dresser une carte de l'évolution mesurée des températures atteintes en différents points de l'interface entre la fausse pièce et la seconde pièce et, ainsi, une carte de l'évolution attendue des températures en différents points de l'interface entre la première et la seconde pièce. En outre, la fausse pièce et les capteurs sont réutilisables car non soudés lors de l'opération. Mais encore, une reproductibilité naturelle du positionnement des capteurs thermiques est avantageusement atteinte.

Selon un première mode de réalisation, la fausse pièce est un gabarit.

Selon une particularité, le gabarit est constitué en polytétrafluoroéthylène et la seconde pièce est constituée en un polyéthylène.

Selon une autre particularité, la seconde pièce est un accessoire et le gabarit reproduit les formes et dimensions d'un tube de distribution de fluide sur lequel l'accessoire est destiné à être soudé.

Selon une autre particularité, la seconde pièce est un tube de distribution de fluide et le gabarit reproduit les forme et dimensions d'un accessoire destiné à être soudé audit tube.

Selon un deuxième mode de réalisation, la fausse pièce est une plaque.

Selon une particularité, la plaque est constituée en polytétrafluoroéthylène et la seconde pièce est constituée en polyéthylène.

Selon une autre particularité, la seconde pièce est un tube de distribution de fluide destiné à être soudé bout à bout avec un autre tube de distribution de fluide et ladite plaque est configurée pour être disposée sur la périphérie d'une extrémité dudit tube et a une surface supérieure à la section dudit tube.

Selon une autre particularité, les capteurs thermiques sont connectés à un moyen d'enregistrement.

L'invention concerne également un procédé d'évaluation de la qualité de soudage entre une première pièce et une deuxième pièce en matière plastique comprenant les étapes consistant en :

- la disposition en lieu et place de la première pièce, dans une configuration de soudage de la première pièce et la seconde pièce, d'un dispositif de mesure de l'évolution d'un champ de température lors d'une opération de soudage entre la première et la seconde pièce, le dispositif comprenant une fausse pièce représentative de la première pièce, cette fausse pièce étant instrumentée au moyen d'un ensemble de capteurs thermiques fixés et répartis au moins sur une partie d'une surface de contact de la fausse pièce avec la seconde pièce, ladite fausse pièce étant constituée en un matériau non soudable lors de l'opération de soudage présentant des caractéristiques thermiques proches de celles de la première pièce,
- la mise en oeuvre des étapes usuelles d'une opération de soudage,
- la mesure par les capteurs thermiques de l'évolution du champ de température atteinte à l'interface entre le dispositif et la seconde pièce lors des étapes de l'opération de soudage.

Il est ainsi possible d'évaluer, principalement en laboratoire, la qualité de la soudure qui serait obtenue entre les deux pièces en matière plastique lors d'une opération de soudage réalisée selon lesdites étapes et dans les conditions de leur mise en oeuvre, ces dernières pouvant éventuellement être modifiées lors d'une nouvelle mise en oeuvre du procédé d'évaluation selon l'invention, afin de déterminer celles qui permettraient d'obtenir une soudure de qualité satisfaisante

D'autres avantages pourront encore apparaître à l'homme du métier à la lecture des exemples ci-dessous, illustrés par les figures annexées, donnés à titre illustratif.

## Brève description des figures

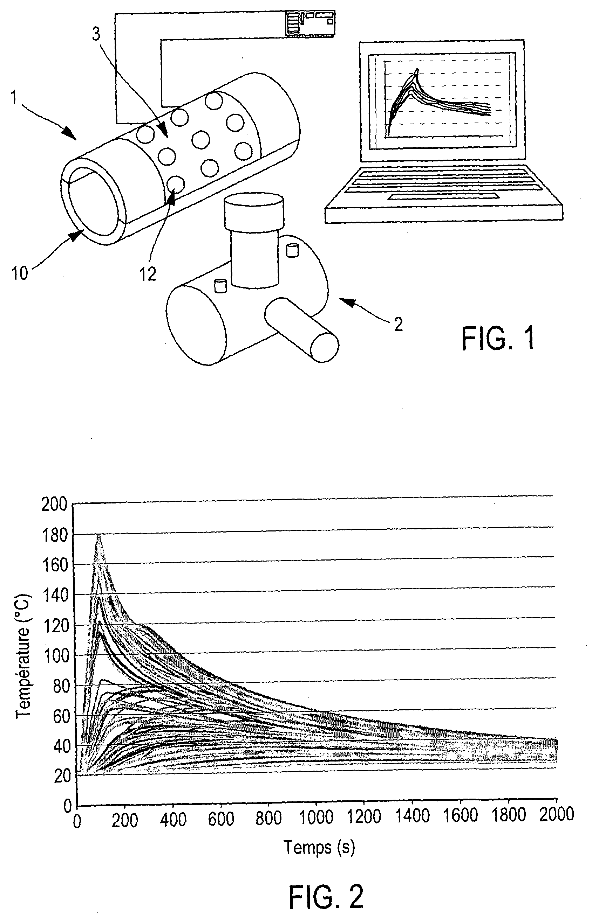

- La figure 1 représente un système d'évaluation de la qualité d'un soudage par électrofusion entre deux pièces en matière plastique, faisant intervenir un dispositif de mesure de l'évolution d'un champ de température selon un mode de réalisation de l'invention pour la mise en oeuvre du procédé d'évaluation selon un mode de réalisation de l'invention.

- La figure 2 représente un graphique dans lequel l'abscisse porte les valeurs du temps (en secondes) et l'ordonnée porte les mesures de température (en degrés Celsius) réalisées en chaque point du champ de température grâce au dispositif de mesure selon le mode de réalisation de l'invention illustré dans la Figure 1.

## Modes de réalisation

Le présent mode de réalisation concerne en premier lieu un dispositif de mesure de l'évolution d'un champ de température lors d'une opération de soudage entre une première pièce et une deuxième pièce en matière plastique. Le dispositif comprend une fausse pièce représentative de la première pièce, laquelle fausse pièce est instrumentée au moyen d'un ensemble de capteurs thermiques fixés et répartis au moins sur une partie d'une surface de contact de la fausse pièce avec la seconde pièce. La fausse pièce est en outre constituée en un matériau non soudable lors de l'opération de soudage présentant des caractéristiques thermiques proches de celles de la première pièce.

Le soudage entre la première pièce et la deuxième pièce peut être effectué par électrofusion ou par soudage bout à bout et toutes les deux pièces peuvent être constituées d'une même matière plastique ou de matières plastiques différentes entre elles, ou encore chaque pièce peut être constituée de plusieurs matières plastiques différentes entre elles. Des pièces en polyéthylène sont plus particulièrement considérées, mais l'utilisation de polyamide, polybutylène, polypropylène ou polychlorure de vynile n'est pas exclue, ces matériaux constituant la grande majorité des canalisations utilisées dans les réseaux de distribution de gaz ou dans les réseaux de distribution d'eau. Dans le cas où le soudage entre les deux pièces plastiques est effectué par électrofusion, les conditions de l'opération dépendent de la méthode utilisée. A titre d'exemple, une méthode de soudage par électrofusion est décrite par le document de brevet référencé FR2901173, qui est également résumé en introduction de ce document. Ces conditions concernent principalement la température à laquelle la nappe chauffante est amenée et la durée de l'opération.

Tel qu'illustré sur la figure 1, lorsque le soudage entre les deux pièces plastiques est effectué par électrofusion, le dispositif 1 selon un mode de réalisation est tel que la fausse pièce 10 représentative de la première pièce est un gabarit. La forme et les dimensions du gabarit sont les mêmes que celles de la première pièce, au moins pour ce qui concerne la surface de contact 3 du gabarit avec la seconde pièce (2) à souder.

Le gabarit 10 est instrumenté au moyen d'un ensemble de capteurs thermiques 12 également compris dans le dispositif 1. Ces capteurs sont plus particulièrement fixés de façon pérenne au moins sur une partie de la surface de contact 3 du gabarit avec la seconde pièce 2, et préférentiellement sur toute la surface de contact 3 du gabarit avec la seconde pièce 2. Les capteurs thermiques 12 sont par exemple des thermocouples et sont par exemple au nombre de une à plusieurs centaines.

Chaque capteur thermique 12 est plus particulièrement fixé dans un alésage pratiqué dans le gabarit, le capteur thermique étant orienté vers la surface de contact 3 du gabarit avec la seconde pièce 2, tandis qu'un fil électrique partant de chaque capteur thermique vers un côté opposé à la surface de contact 3 conduit le signal électrique de mesure émis par le capteur vers des moyens d'acquisition et de traitement de ce signal, ces moyens étant représentés mais non référencés sur la figure 1. Plus particulièrement, chaque capteur thermique 12 est connecté avec un moyen d'enregistrement qui fait partie desdits moyens d'acquisition et de traitement du signal électrique afin d'enregistrer les mesures effectuées.

Ledit gabarit 10 est en outre constitué en un matériau non soudable dans les conditions de l'opération de soudage. Plus particulièrement, le matériau constituant le gabarit ne doit pas pouvoir se souder à la seconde pièce dans les conditions de l'opération de soudage. L'opération de soudage par électrofusion selon le présent procédé d'évaluation de la qualité du soudage entre deux pièces en matière plastique décrit ci-dessous, constitue donc une simulation du soudage sans mener à celui-ci. Ainsi, il est possible, après la simulation de l'opération de soudage par électrofusion selon le présent procédé, de désolidariser l'ensemble formé du dispositif 1 et de la seconde pièce, sans induire la destruction du dispositif 1 qui est, par conséquent, réutilisable. En outre, une reproductibilité naturelle du positionnement des capteurs thermiques 12 est avantageusement atteinte d'une première utilisation du dispositif 1 à toute autre.

Les capteurs sont plus particulièrement répartis au moins sur ladite partie de la surface de contact 3 du gabarit avec la seconde pièce 2, et préférentiellement sur toute la surface de contact 3 du gabarit avec la seconde pièce 2. Cette répartition est préférentiellement régulière et organisée pour former un réseau maillé, de telle sorte que soit atteinte une densité surfacique appropriée des capteurs thermiques sur ladite partie de la surface de contact 3 du gabarit avec la seconde pièce 2. A titre d'exemple, Ladite densité surfacique est plus particulièrement comprise entre un capteur thermique par centimètre carré ($cm^2$) et dix capteurs thermiques par centimètre carré ($cm^2$), et est préférentiellement de cinq capteurs thermiques par centimètre carré ($cm^2$).

Bien que nécessairement non soudable dans les conditions de l'opération de soudage, le matériau constituant le gabarit 10 doit présenter préférentiellement des caractéristiques thermiques proches de celles de la première pièce dont il a la forme et les dimensions. On entend par là que chaque caractéristique thermique du gabarit 10 ne diffère pas d'un facteur supérieur à 3 de la caractéristique correspondante de la première pièce dont il a la forme et les dimensions. Ainsi, lorsque la seconde pièce est en polyéthylène, un matériau adapté pour constituer le gabarit 10 est par exemple du polytétrafluoroéthylène. A titre d'exemple illustratif, le tableau 1 ci-dessus présente en vis-à-vis les caractéristiques thermiques du polyéthylène et du polytétrafluoroéthylène grâce auquel il est aisément possible de vérifier que la contrainte entre les caractéristiques thermiques du gabarit 10 et de la première pièce dont le gabarit a la forme et les dimensions est respectée pour l'exemple donné.

Tableau 1

| | Polyéthylène (PE) | PTFE |
|---|---|---|
| Chaleur spécifique à 23°C ( $J.K^{-1}.kg^{-1}$) | 1650 | 1000 |
| Coefficient d'expansion thermique ($10^{-6}.K^{-1}$) | 130 à 200 | 100 à 160 |
| Conductivité thermique à 23°C ($W.m^{-1}.K^{-1}$) | 0,3 à 0,5 | 0,25 |
| Température de fin de fusion maximale (°C) | 140 | 327 |
| Masse volumique ($g \cdot cm^{-3}$) | 0,91 à 0,96 | 2,16 |

Ainsi, en plaçant le dispositif 1 en lieu et place de la première pièce à souder avec la seconde pièce 2, il est avantageusement possible, selon le procédé d'évaluation décrit ci-dessous, de dresser une carte de l'évolution mesurée des températures atteintes en différents points de la surface de contact 3 du gabarit avec la seconde pièce 2. Cette carte est illustrée graphiquement sur la figure 2. Par extrapolation, cette carte représente en une certaine approximation une carte de l'évolution attendue des températures en différents points de la surface de contact entre la première et la seconde pièce, ladite extrapolation étant réalisée en une approximation d'autant meilleure que chaque caractéristique thermique du gabarit est proche de la caractéristique correspondante de la pièce dont il a la forme et les dimensions.

En effet, les transferts thermiques sont d'autant moins perturbés par rapport à une configuration visée impliquant les deux pièces en matière plastique à souder que la similitude entre chaque caractéristique thermique du gabarit 10 et de la première pièce qu'il remplace est grande.

Les deux cas suivants sont également possibles suivant que le gabarit 10 remplace une pièce constituant un accessoire ou un tube de distribution du réseau de distribution.

Selon un premier cas, la seconde pièce 2 est un accessoire et le gabarit 10 reproduit les formes et dimensions d'un tube de distribution de fluide sur lequel l'accessoire est destiné à être soudé.

Selon un deuxième cas, la seconde pièce 2 est un tube de distribution de fluide et le gabarit 10 reproduit les formes et dimensions d'un accessoire destiné à être soudé audit tube.

Ainsi, le concept est réversible : s'il est possible que le gabarit 10 soit représentatif d'une canalisation principale, l'objectif étant d'y souder une prise, il est également possible de réaliser un gabarit 10 représentatif de la prise pour évaluer l'impact du soudage sur la canalisation réelle. Selon un mode de réalisation (pas illustré dans les figures), lorsque le soudage entre les deux pièces plastiques est effectué par soudage bout à bout, la fausse pièce 10 représentative de la première pièce est une plaque. La plaque remplace la première pièce qui est destinée à être soudée en bout à bout avec une deuxième pièce.

Particulièrement, la plaque est instrumentée au moyen d'un ensemble de capteurs thermiques et est constituée en un matériau non soudable lors de l'opération de soudage présentant des caractéristiques thermique proches de celles de la première pièce.

Les capteurs de la plaque sont fixés au moins sur une partie de la surface de contact de la plaque avec la seconde pièce, et préférentiellement sur toute la surface de contact de la plaque avec la seconde pièce. Les capteurs thermiques sont par exemple des thermocouples et sont par exemple au nombre de une à plusieurs centaines. Chaque capteur thermique transmet un signal électrique de mesure émis par le capteur vers des moyens d'acquisition et de traitement de ce signal. Plus particulièrement, chaque capteur thermique est connecté avec un moyen d'enregistrement qui fait partie desdits moyens d'acquisition et de traitement du signal électrique afin d'enregistrer les mesures.

A titre d'exemple, la plaque est constituée en polytétrafluoroéthylène et la seconde pièce est constituée en polyéthylène.

En outre, à titre d'exemple, la seconde pièce est un tube de distribution de fluide destiné à être soudé bout à bout avec un autre tube de distribution de fluide et ladite plaque est configurée pour être disposée sur la périphérie d'une extrémité dudit tube et a une surface supérieure à la section dudit tube. Il est à noter qu'il n'y a pas de restriction à la forme de la plaque. A titre d'exemple, la plaque peut avoir une forme circulaire ou une forme rectangulaire.

Dans tous les deux modes de réalisation différents selon lesquels la fausse pièce 10 est un gabarit ou une plaque et à partir d'un enregistrement de la mesure de l'évolution du champ de température en chaque point de la surface de contact 3 de la fausse pièce (10) et la seconde pièce 2, un programme simple mettant en oeuvre les étapes d'un procédé d'évaluation de la qualité de soudage entre la première pièce et la seconde pièce en matière plastique peut être utilisé.

Particulièrement, le procédé d'évaluation de la qualité de soudage entre une première pièce et une seconde pièce en matière plastique comprend une première étape dans laquelle un dispositif 1 de mesure de l'évolution d'un champ de température entre la première pièce et la deuxième pièce est disposé en lieu et place de la première pièce. Le dispositif 1 comprend une fausse pièce 10 représentative de la première pièce et cette fausse pièce 10 est instrumentée au moyen d'un ensemble de capteurs thermiques 12 fixés et répartis au moins sur une partie d'une surface de contact 3 de la fausse pièce 10 avec la seconde pièce 2. Ladite fausse pièce 10 est aussi constituée en un matériau non soudable lors de l'opération de soudage présentant des caractéristiques thermiques proches de celles de la première pièce.

En outre, le procédé d'évaluation comprend une deuxième étape dans laquelle la mise en oeuvre des étapes usuelles d'une opération de soudage est effectuée et une troisième étape dans laquelle les capteurs thermiques 12 mesurent l'évolution du champ de température atteinte à l'interface entre le dispositif 1 et la seconde pièce 2 lors des étapes de l'opération de soudage.

De plus, dans un mode de réalisation, le procédé d'évaluation comporte en outre le calcul à partir de la mesure de l'évolution du champ de température d'un paramètre représentatif de l'interdiffusion macromoléculaire qui aurait été atteinte dans les conditions de l'opération de soudage dans la configuration visée impliquant les deux pièces en matière plastique à souder (par électrofusion ou par soudage bout à bout), c'est-à-dire si la première pièce n'avait pas été remplacée par le dispositif 1.

Une fois comparé à au moins une valeur de référence préétablie, ce paramètre permet d'accepter ou de rejeter le soudage réalisé avec les matières plastiques dans lesquelles les deux pièces sont constituées et dans les conditions de l'opération de soudage.

Il est à noter que différentes valeurs de référence peuvent être établies sur la base d'essais de soudage, par exemple réalisés sur micro-éprouvettes.

Le paramètre représentatif de l'interdiffusion macromoléculaire, p , peut plus particulièrement être calculé à partir de l'équation suivante :

$$p = \int_{t_1}^{t_2} \exp\left(-E\middle/RT(t)\right)dt$$

expression dans laquelle R est la constante de Boltzmann, E l'énergie d'activation de diffusion et $T(t)$ est l'évolution de la température mesurée en fonction du temps, et particulièrement entre le temps $t_1$ et $t_2$.

Il est à noter en outre que le soudage s'effectue si un minimum d'énergie est apporté à l'interface entre deux pièces en matière plastique. Toutefois, en augmentant trop les paramètres de l'opération de soudage (tels que la tension, l'intensité ou le temps d'alimentation en énergie électrique de la nappe chauffante ou du miroir chauffant) alors le matériau peut subir des dommages.

Un tel procédé peut également s'inscrire dans l'optimisation d'une opération de soudage ou dans la validation d'un nouveau matériel (nouveau type de prise ou de matériaux) au regard des paramètres de soudage actuels.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes.

**Revendications**

1. Dispositif (1) de mesure de l'évolution d'un champ de température lors d'une opération de soudage entre une première pièce et une seconde pièce (2) en matière plastique **caractérisé en ce qu'**il comprend une fausse pièce (10) représentative de la première pièce, la fausse pièce (10) étant instrumentée au moyen d'un ensemble de capteurs thermiques (12) fixés et répartis au moins sur une partie d'une surface de contact (3) de la fausse pièce (10) avec la seconde pièce (2), ladite fausse pièce (10) étant en outre constituée en un matériau non soudable lors de l'opération de soudage présentant des caractéristiques thermiques proches de celles de la première pièce.

2. Dispositif selon la revendication 1, **caractérisé en ce que** la fausse pièce (10) est un gabarit.

3. Dispositif selon la revendication 2, **caractérisé en ce que** le gabarit est constitué en polytétrafluoroéthylène et la seconde pièce (2) est constituée en polyéthylène.

4. Dispositif selon l'une quelconque des revendications 2 et 3, **caractérisé en ce que** la seconde pièce (2) est un accessoire et le gabarit reproduit les formes et dimensions d'un tube de distribution de fluide sur lequel l'accessoire est destiné à être soudé.

5. Dispositif selon l'une quelconque des revendications 2 et 3, **caractérisé en ce que** la seconde pièce (2) est un tube de distribution de fluide et le gabarit reproduit les forme et dimensions d'un accessoire destiné à être soudé audit tube.

6. Dispositif selon la revendication 1, **caractérisé en ce que** la fausse pièce (10) est une plaque.

7. Dispositif selon la revendication 6, **caractérisé en ce que** la plaque est constitué en polytétrafluoroéthylène et la seconde pièce (2) est constituée en polyéthylène.

8. Dispositif selon l'une quelconque des revendications 6 et 7, **caractérisé en ce que** la seconde pièce (2) est un tube de distribution de fluide destiné à être soudé bout à bout avec un autre tube de distribution de fluide et ladite plaque est configurée pour être disposée sur la périphérie d'une extrémité dudit tube et a une surface supérieure à la section dudit tube.

9. Dispositif selon l'une quelconque des revendications précédentes, **caractérisé en ce que** les capteurs thermiques (12) sont connectés à un moyen d'enregistrement.

10. Procédé d'évaluation de la qualité de soudage entre une première pièce et une seconde pièce en matière plastique **caractérisé en ce qu'**il comprend les étapes consistant en:

   - la disposition en lieu et place de la première pièce, dans une configuration de soudage de la première pièce et la seconde pièce, d'un dispositif (1) selon la revendication 1,
   - la mise en oeuvre des étapes usuelles d'une opération de soudage,

- la mesure par les capteurs thermiques (12) de l'évolution du champ de température atteinte à l'interface entre le dispositif (1) et la seconde pièce (2) lors des étapes de l'opération de soudage.

11. Procédé d'évaluation selon la revendication 10 comportant une étape de calcul à partir de la mesure de l'évolution du champ de température d'un paramètre quantifiant l'interdiffusion macromoléculaire qui aurait été atteinte dans les conditions de l'opération de soudage, si la première pièce n'avait pas été remplacée par le dispositif (1), et une étape de comparaison de ce paramètre calculé avec des valeurs de référence connues pour être représentatives d'une bonne qualité de la soudure.

**Patentansprüche**

1. Vorrichtung (1) zum Messen der Entwicklung eines Temperaturfeldes bei einem Schweißvorgang zwischen einem ersten Werkstück und einem zweiten Werkstück (2) aus Kunststoffmaterial, **dadurch gekennzeichnet, dass** sie ein falsches Werkstück (10) umfasst, welches für das erste Werkstück repräsentativ ist, wobei das falsche Werkstück (10) mittels eines Satzes thermischer Sensoren (12) instrumentiert ist, die mindestens auf einem Teil einer Kontaktfläche (3) des falschen Werkstücks (10) mit dem zweiten Werkstück (2) befestigt und verteilt sind, wobei das falsche Werkstück (10) weiter aus einem bei dem Schweißvorgang nicht schweißbaren Material besteht, welches thermische Eigenschaften nahe denjenigen des ersten Werkstücks aufweist.

2. Vorrichtung nach Anspruch 1, **dadurch gekennzeichnet, dass** das falsche Werkstück (10) eine Schablone ist.

3. Vorrichtung nach Anspruch 2, **dadurch gekennzeichnet, dass** die Schablone aus Polytetrafluorethylen besteht, und das zweite Werkstück (2) aus Polyethylen besteht.

4. Vorrichtung nach einem der Ansprüche 2 und 3, **dadurch gekennzeichnet, dass** das zweite Werkstück (2) ein Beschlag ist und die Schablone die Formen und Abmessungen eines Fluidverteilerrohrs reproduziert, auf das der Beschlag geschweißt werden soll.

5. Vorrichtung nach einem der Ansprüche 2 und 3, **dadurch gekennzeichnet, dass** das zweite Werkstück (2) ein Fluidverteilerrohr ist, und die Schablone die Formen und Abmessungen eines Beschlags reproduziert, das auf das Rohr geschweißt werden soll.

6. Vorrichtung nach Anspruch 1, **dadurch gekennzeichnet, dass** das falsche Werkstück (10) eine Platte ist.

7. Vorrichtung nach Anspruch 6, **dadurch gekennzeichnet, dass** die Platte aus Polytetrafluorethylen besteht, und das zweite Werkstück (2) aus Polyethylen besteht.

8. Vorrichtung nach einem der Ansprüche 6 und 7, **dadurch gekennzeichnet, dass** das zweite Werkstück (2) ein Fluidverteilerrohr ist, das mit einem anderen Fluidverteilerrohr stumpfgeschweißt werden soll, und die Platte dafür konfiguriert ist, auf dem Umfang eines Endes des Rohrs angeordnet zu werden, und eine Fläche aufweist, die größer ist als der Querschnitt des Rohrs.

9. Vorrichtung nach einem der vorstehenden Ansprüche, **dadurch gekennzeichnet, dass** die thermischen Sensoren (12) mit einem Aufzeichnungsmittel verbunden sind.

10. Verfahren zum Beurteilen der Schweißqualität zwischen einem ersten Werkstück und einem zweiten Werkstück aus Kunststoffmaterial, **dadurch gekennzeichnet, dass** es die Schritte umfasst, die bestehen in:

   - dem Anordnen einer Vorrichtung (1) nach Anspruch 1 an Ort und Stelle des ersten Werkstücks in einer Konfiguration zum Schweißen des ersten Werkstücks und des zweiten Werkstücks,
   - dem Umsetzen der üblichen Schritte eines Schweißvorgangs,
   - dem Messen, über die thermischen Sensoren (12), der Entwicklung des Temperaturfeldes, das bei den Schritten des Schweißvorgangs an der Schnittstelle zwischen der Vorrichtung (1) und dem zweiten Werkstück (2) erreicht wird.

11. Beurteilungsverfahren nach Anspruch 10, umfassend einen Schritt des Berechnens, anhand der Messung der Entwicklung des Temperaturfeldes, eines Parameters, welcher die makromolekulare Interdiffusion quantifiziert, die unter den Bedingungen des Schweißvorgangs erreicht worden wäre, wenn das erste Werkstück nicht durch die Vorrichtung (1) ersetzt worden wäre, und einen Schritt des Vergleichens dieses berechneten Parameters mit Referenzwerten, die dafür bekannt sind, für eine gute Qualität der Schweißung repräsentativ zu sein.

**Claims**

1. Device (1) for measuring the evolution in a range of temperatures during an operation of welding between a first component and a second component (2) made of plastic **characterised in that** it comprises a dummy component (10) indicative of the first component, the dummy component (10) being provided with a set of heat sensors (12) fixed and distributed on at least part of a contact surface (3) of the dummy component (10) with the second component (2), said dummy component (10) being furthermore made of a material that cannot be welded under the conditions of the welding operation exhibiting thermal characteristics similar to those of the first component.

2. Device according to claim 1, **characterised in that** the dummy component (10) is a template.

3. Device according to claim 2, **characterised in that** the template is made of polytetrafluoroethylene and the second component (2) is made of polyethylene.

4. Device according to any of claims 2 and 3, **characterised in that** the second component (2) is an accessory and the template reproduces the shapes and dimensions of a tube for the distribution of fluid onto which the accessory is intended to be welded.

5. Device according to any of claims 2 and 3, **characterised in that** the second component (2) is a tube for the distribution of fluid and the template reproduces the shapes and dimensions of an accessory intended to be welded to said tube.

6. Device according to claim 1, **characterised in that** the dummy component (10) is a plate.

7. Device according to claim 6, **characterised in that** the plate is made of polytetrafluoroethylene and the second component (2) is made of polyethylene.

8. Device according to any of claims 6 and 7, **characterised in that** the second component (2) is a tube for the distribution of fluid intended to be butt welded with another tube for the distribution of fluid and said plate is configured to be arranged on the periphery of an end of said tube and has a surface greater than the section of said tube.

9. Device as claimed in any preceding claim, **characterised in that** the heat sensors (12) are connected to a means of recording.

10. Method for assessing the quality of the welding between a first component and a second component made of plastic **characterised in that** it comprises the steps of:

   - arranging in place of the first component, in a welding configuration of the first component and the second component, of a device (1) according to claim 1,
   - the implementing of the usual steps of a welding operation,
   - the measuring via the heat sensors (12) of the evolution of the range of temperatures reached at the interface between the device (1) and the second component (2) during the steps of the welding operation.

11. Method for assessing according to claim 10 comprising a step of calculating using the measurement of the evolution of the range of temperatures of a parameter that qualifies the macromolecular interdiffusion that would have been reached in the conditions of the welding operation, if the first component had not been replaced with the device (1), and a step of comparing this calculated parameter with reference values known to be indicative of a good quality of the welding.

FIG. 1

FIG. 2

## RÉFÉRENCES CITÉES DANS LA DESCRIPTION

### Documents brevets cités dans la description

- FR 2901173
- EP 2255952 A1
- EP 0323793 A1
- EP 1225028 A2
- US 4943706 A